# FASCICULE DE BREVET EUROPEEN

(11) **EP 3 073 395 B1**
(45) Date de publication et mention de la délivrance du brevet: **29.07.2020**
(21) Numéro de dépôt: 16162290.7
(22) Date de dépôt: 24.03.2016
(51) Int. Cl.: G06F 16/00, G06F 16/48

(54) **PROCÉDÉ ET DISPOSITIF D'ACCÈS À UNE PLURALITÉ DE CONTENUS, TERMINAL ET PROGRAMME D'ORDINATEUR CORRESPONDANTS**
VERFAHREN UND VORRICHTUNG FÜR DEN ZUGANG ZU EINER VIELZAHL VON INHALTEN, ENTSPRECHENDES ENDGERÄT UND COMPUTERPROGRAMM
METHOD AND DEVICE FOR ACCESSING A PLURALITY OF CONTENTS, CORRESPONDING TERMINAL AND COMPUTER PROGRAM

(30) Priorité: 27.03.2015 FR 1552636
(43) Date de publication de la demande: 28.09.2016
(73) Titulaire: ORANGE, 75015 Paris (FR)
(72) Inventeur: GUIONNET, Chantal, 35510 Cesson-Sevigne (FR); DOS SANTOS, Martinho, 35235 Thorigne-Fouillard (FR)
(74) Mandataire: Vidon Brevets & Stratégie

(56) Documents cités:
- US-A1- 2007 027 861
- US-A1- 2007 239 792
- US-A1- 2010 211 575

## Description

### 1. Domaine de l'invention

Le domaine de l'invention est celui de la navigation multimédia, et plus particulièrement celui de la recherche et de la présentation de contenus multimédia et de leur affichage sur un écran. Un tel contenu peut être du texte, du son (ou de l'audio (voix, chant, musique, etc), des images, des vidéos, des applications/services ou encore toute combinaison de ces différents éléments.

L'invention s'applique notamment de façon privilégiée mais non limitative à la navigation dans des catalogues de contenus, tel que par exemple un catalogue de podcasts, de vidéos à la demande (VOD, pour « Video On Demand » en anglais), de livres, d'images, etc.

L'invention peut notamment être mise en œuvre dans un terminal doté d'une interface utilisateur et d'une interface graphique, par exemple une tablette, un téléphone portable, un smartphone (« téléphone intelligent »), un ordinateur personnel, une télévision connectée à un réseau de communication etc.

### 2. Art antérieur

Aujourd'hui, lorsque l'utilisateur souhaite accéder à des contenus multimédia ou approfondir ses connaissances relatives à de tels contenus, il est amené à parcourir des catalogues de contenus, en d'autres termes des bases de données de contenus.

De tels catalogues, tels que par exemple les catalogues VOD, sont des magasins numériques qui proposent une « mise en rayon » de contenus multimédia classés de façon thématique et statique, afin de permettre à l'utilisateur de choisir plus facilement et rapidement le contenu dont il a envie.

Parmi ces catalogues, on peut notamment citer la « base de données cinématographiques d'Internet » (IMDb) (de l'anglais « *Internet Movie Database* »), base de données en ligne sur le cinéma mondial, la télévision et les jeux vidéo, restituant un grand nombres d'informations concernant des films, des acteurs, des réalisateurs, des scénaristes ou tout intervenant dans les contenus multimédia que cette base de données regroupe.

Ces catalogues présentent en général, sur requête de l'utilisateur au moyen d'une interface, une fiche de renseignements détaillée d'un contenu multimédia qu'il est apte à identifier et auquel il souhaite accéder.

De telles fiches de renseignements comprennent notamment des données descriptives/techniques, appelées métadonnées, telles que le titre, la durée, le casting, un résumé ...

Lors de sa recherche, l'utilisateur saisit généralement au moins une métadonnée, telle que le titre, le nom d'un acteur ou encore le genre du contenu qu'il recherche.

Les résultats obtenus selon ce type de recherche correspondent aux contenus qui contiennent la ou les métadonnée(s) saisie(s) par l'utilisateur.

Sans une connaissance préalable de cette métadonnée, l'utilisateur ne parviendra pas à définir sa recherche et à trouver les contenus qu'il souhaite.

Cependant, il arrive bien souvent que l'on souhaite découvrir un nouveau contenu tout en ayant des difficultés à exprimer la métadonnée pertinente qui permettrait d'y accéder.

Il en résulte que l'utilisateur saisit une métadonnée approximative et obtient des résultats qui ne sont pas toujours pertinents.

Actuellement, la navigation d'un utilisateur via un moteur de recherche ou via un catalogue est donc limitée car aucune solution ne permet de l'assister, par ordinateur, dans sa démarche de définition d'une métadonnée pertinente utilisée ensuite automatiquement pour la recherche de nouveaux contenus correspondants à cette métadonnée de recherche.

Il existe donc un besoin d'une solution pour assister l'utilisateur dans sa recherche afin de lui permettre d'accéder aux types de contenus qu'il recherche, de façon ciblée et rapide.

Le document US2007/239792 A1 décrit une méthode pour déterminer un fichier cible à l'aide de la génération d'une requête sur la base des attributs d'un ou plusieurs fichiers associés à la requête. Le document US2007/027861 A1 décrit un procédé permettant d'identifier les catégories auxquelles un contenu de référence pourrait appartenir. Le document US2010/211575 A1 décrit un système et une méthode pour présenter automatiquement un fichier média sur un téléphone mobile, en fonction d'une analyse de métadonnées associées au fichier média.

### 3. Exposé de l'invention

L'invention propose une solution nouvelle qui ne présente pas l'ensemble de ces inconvénients de l'art antérieur, sous la forme d'un procédé d'accès à une pluralité de contenus à partir d'au moins une information représentative d'au moins un contenu, dit contenu de référence, tel que défini dans la revendication 1.

L'invention propose ainsi une définition assistée par ordinateur de la ou des métadonnées de recherche pertinentes que l'utilisateur souhaite retrouver selon un certain niveau d'intensité dans les contenus issus de la recherche.

Selon l'invention, une telle assistance, opérée par ordinateur, dans la définition de métadonnée(s) recherchée(s) pertinente(s) a pour entrée un ou plusieurs premier(s) contenu(s), dit(s) contenu(s) de référence (ou encore contenu de départ), identifié(s) au moyen d'une information représentative, telle qu'un titre ou une image représentative de ce contenu multimédia (l'image étant par exemple extraite du contenu multimédia, correspondant par exemple au contenu vidéo, ou correspondant à la jaquette qui lui est associée).

L'information représentative de ce contenu de référence peut être saisie manuellement ou vocalement par l'utilisateur, au moyen d'une interface graphique ou d'un outil de saisie vocale respectivement, du dispositif selon l'invention, ou sélectionnée manuellement ou vocalement dans une liste prédéfinie restituée au préalable à l'utilisateur, ou encore présentée automatiquement à l'utilisateur lorsqu'il s'agit par exemple du dernier contenu restitué par le module de restitution du dispositif.

Une fois cette information représentative reçue, l'ensemble des métadonnées de ce contenu de référence est restitué automatiquement à l'utilisateur sur une fenêtre graphique d'un écran de restitution ou au moyen d'un haut-parleur, ce qui permet à l'utilisateur de définir ce qu'il a aimé ou pas dans le contenu de référence qu'il utilise comme point de départ, alors que sans cette étape il ne serait pas parvenu à formaliser sa recherche.

Selon l'invention, on entend par métadonnée, les données descriptives/techniques du contenu multimédia, telles que le titre, la durée, le casting, mais également des données descriptives/techniques représentatives d'éléments du contenus tels que les noms d'acteurs, chanteurs, éditeurs, producteurs ou encore des thèmes abordés dans le contenu de référence ... , et des mots-clés plus précis peuvent être associés à une métadonnée. Par exemple, « Film d'époque », « Aventures en mer », « Film de super-héros » et « gros budget » sont des mots-clés plus précis que la métadonnée descriptive de contenu « Grand spectacle » à laquelle ils sont associés.

Ainsi, l'étape de restitution de l'invention peut présenter différents niveaux hiérarchiques de granularité des données descriptives/techniques d'un contenu.

L'ensemble des métadonnées de ce contenu de référence, restitué automatiquement à l'utilisateur, peut être préalablement sélectionné par l'utilisateur ou par un fournisseur de services proposant l'exécution du procédé selon l'invention à son utilisateur.

En particulier, la restitution de cet ensemble peut être modifiée en fonction de la taille de l'écran de restitution qui diffère par exemple d'une tablette à un téléphone portable ou encore à un récepteur de télévision connecté à un réseau de communication. Par exemple, pour des écrans de petite taille, la qualité de restitution de cet ensemble sera modifiée, voire dégradée en termes de résolution.

Ainsi, grâce à cette restitution selon l'invention, l'utilisateur parvient à cerner la métadonnée qu'il souhaite retrouver ou au contraire celle qu'il souhaite exclure de sa recherche.

Une telle assistance est donc mise en œuvre relativement au contenu de référence.

Ainsi, grâce à la présente invention, l'utilisateur peut par exemple identifier un ou plusieurs contenu(s) de référence qui lui a(ont) particulièrement plu et utiliser celui-ci ou ceux-ci comme point(s) de départ pour personnaliser sa recherche de contenus, appelés contenus résultants, distincts du ou des contenu(s) de référence.

Selon un autre exemple, l'appréciation de l'utilisateur du contenu de référence est mitigée, et l'étape de restitution selon l'invention lui permet de déterminer quelles métadonnées il souhaite retrouver dans les contenus issus de sa recherche, et les métadonnées de ce contenu de référence qu'il souhaite au contraire ignorer.

Selon l'invention, la requête de sélection, effectuée par exemple par l'utilisateur et reçue par le module de réception du dispositif selon l'invention, identifie donc la partie de métadonnées du contenu de référence que le module de détermination du dispositif selon l'invention doit exploiter, complètement ou partiellement, pour déterminer au moins un contenu résultant.

Un tel contenu résultant sera identifié lors de l'étape de détermination dans une base de données comprenant une pluralité de contenus à disposition, du fait qu'il présente (i.e. niveau d'intensité non nul), ou non (i.e. niveau d'intensité nul) au moins une des métadonnées recherchées pertinentes définies précédemment selon l'invention. En d'autres termes, selon un mode de réalisation de l'invention, dit mode de réalisation général, l'expression « niveau d'intensité » représente la présence (lorsque l'on souhaite que le contenu résultant présente « également » la métadonnée recherchée sélectionnée dans les métadonnées du contenu de référence), ou au contraire l'absence de la métadonnée recherchée sélectionnée dans les contenus résultants de l'étape de détermination.

De tels contenus résultants sont donc personnalisés au regard des goûts ou attentes de l'utilisateur. En outre, le fait de sélectionner les métadonnées pertinentes à retrouver selon un certain niveau d'intensité dans le ou les contenus issus de la recherche permet d'optimiser la cible de la recherche et donc de l'accélérer et de permettre une mise en œuvre en temps réel.

Ces contenus résultants, ou des informations représentatives de ces contenus résultants, (telles qu'un titre ou une image représentative de ce contenu multimédia (l'image étant par exemple extraite du contenu vidéo ou correspondant à la jaquette qui lui est associée)) sont ensuite restitués à l'utilisateur sur au moins une deuxième fenêtre graphique ou via un haut-parleur.

Les techniques de l'art antérieur ne permettent pas de telles performances et une telle personnalisation de la recherche de contenu.

Le procédé d'accès à des contenus selon l'invention est par exemple mis en œuvre dans un terminal, tel que par exemple une tablette, un téléphone portable, un smartphone (« téléphone intelligent »), un ordinateur personnel, un récepteur de télévision connecté à un réseau de communication, etc.

Selon un mode de réalisation particulier, ledit niveau d'intensité est défini, dans ladite requête, relativement audit contenu de référence.

En d'autres termes, le niveau d'intensité de la métadonnée du contenu de référence qui est sélectionnée par l'utilisateur lors de l'étape de restitution selon l'invention est considéré comme un niveau d'intensité de référence, et le niveau d'intensité défini au sein de la requête indique, relativement à ce niveau d'intensité de référence, dans quelle proportion de ce niveau d'intensité de référence la métadonnée recherchée doit être présente au sein des contenus résultants à déterminer.

Certains fournisseurs de services fournissent l'accès à des contenus dont le niveau d'intensité de certaines métadonnées de contenus est quantifié dans la base de données de recherche utilisée. La présente invention peut donc être appliquée à ce type de contenus existants auxquels des niveaux d'intensité de métadonnée ont été préalablement alloués.

Toutefois, ce fournisseur de services ne propose pas de définir le niveau d'intensité d'une métadonnée de recherche en se référant à celui d'une métadonnée d'un contenu de départ utilisé pour assister l'utilisateur dans la définition pertinente de sa recherche.

Selon un mode de réalisation particulier, ledit procédé comprend en outre une étape préalable d'attribution d'un niveau d'intensité à au moins une métadonnée, dite métadonnée à quantifier, de chaque contenu dudit ensemble de contenus à disposition, ladite étape d'attribution comprenant les sous-étapes suivantes mises en œuvre pour ladite métadonnée à quantifier:
- pondération prédéterminée d'un mot-clé associé à ladite métadonnée à quantifier et/ou pondération d'une combinaison prédéterminée d'une pluralité de mots-clés associés à ladite métadonnée à quantifier, délivrant un ou plusieurs poids attribués à ladite métadonnée à quantifier,
- obtention dudit niveau d'intensité de ladite métadonnée à quantifier après cumulation des poids obtenus lors de ladite étape de pondération et normalisation du résultat de ladite cumulation.

Si l'on reprend l'exemple de la métadonnée descriptive de contenu « Grand spectacle », les mots-clés « Film de super-héros » associés à cette métadonnée « Grand spectacle » auront par exemple un poids égal à quatre, les mots-clés « gros budget » auront par exemple un poids égal à deux, tandis que la combinaison des mots-clés « Film d'époque » et « Mort » obtiendra un poids de un, ou la combinaison des mots-clés « grandes batailles » et « guerres spatiales » obtiendra un poids de quatre selon des règles par exemple prédéterminées par un fournisseur de services.

Pour un contenu associé à l'ensemble des mots-clés « Film de super-héros » et « gros budget » de la métadonnée « Grand spectacle » cités ci-dessus, l'ensemble des mots-clés « Film de super-héros » et « gros budget » récoltera donc un poids total de 6, alors que pour des contenus présentant à la fois les mots-clés « Film de super-héros », « gros budget » et les combinaisons « Film d'époque » et « Mort », et « grandes batailles» et « guerres spatiales », l'ensemble des mots-clés « Film de super-héros » et « gros budget » considéré avec les combinaisons « Film d'époque » et « Mort », et « grandes batailles » et « guerres spatiales » obtiendrait un poids total de onze.

Du fait que les métadonnées descriptives ne comprennent pas toutes un nombre égal de mots-clés associés et que les poids associés à ces mots-clés sont divers, une normalisation du poids total obtenu permet de comparer les métadonnées en termes de niveau d'intensité.

Ainsi, pour le contenu associé à l'ensemble des mots-clés « Film de super-héros » et « gros budget », la métadonnée « Grand spectacle » obtiendrait le niveau d'intensité de 0,545.

Selon un aspect particulier de l'invention, ledit niveau d'intensité défini relativement audit contenu de référence appartient au groupe comprenant au moins :
- un même niveau d'intensité de ladite métadonnée recherchée que celui dudit contenu de référence,
- un niveau d'intensité de ladite métadonnée recherchée supérieur à celui dudit contenu de référence,
- un niveau d'intensité de ladite métadonnée recherchée inférieur à celui dudit contenu de référence,
- un niveau d'intensité de ladite métadonnée recherchée nul.

La définition du niveau d'intensité dans la requête peut correspondre à la saisie d'une valeur numérique représentative du niveau d'intensité souhaité par l'utilisateur relativement au niveau d'intensité de référence de la métadonnée recherchée telle que sélectionnée dans le contenu de référence, ou peut correspondre à la saisie d'appréciations de l'utilisateur telle que « également », » surtout pas », « plus », ou encore la saisie d'un pourcentage ou encore l'utilisation d'un curseur.

La définition d'un tel niveau d'intensité permet donc de « doser » le niveau d'intensité de la métadonnée recherchée sélectionnée.

Le procédé selon l'invention utilise cette information pour extraire automatiquement (i.e. sans intervention humaine), N contenus parmi M (avec M>N) contenus à disposition, ces N contenus comprenant la métadonnée recherchée avec un niveau conforme au niveau d'intensité défini par l'utilisateur relativement au(x) contenu(s) de référence.

Selon un mode de réalisation particulier, lorsqu'au moins des première et deuxième métadonnées recherchées sont sélectionnées par l'utilisateur dans ladite pluralité, ladite requête comprend :
- pour ladite première métadonnée recherchée, une information représentative d'un premier niveau d'intensité défini par l'utilisateur relativement audit contenu de référence, et
- pour ladite deuxième métadonnée recherchée, une information représentative d'un deuxième niveau d'intensité défini par l'utilisateur relativement audit contenu de référence,
et ladite étape de détermination délivre au moins un contenu résultant présentant ledit premier niveau d'intensité de ladite première métadonnée recherchée et/ou ledit deuxième niveau d'intensité de ladite deuxième métadonnée recherchée.

Une telle détermination permet de restreindre/élargir le champ de recherche de contenus dans l'ensemble de contenus à disposition en tenant compte respectivement du premier niveau d'intensité de la première métadonnée recherchée et/ou du deuxième niveau d'intensité de la deuxième métadonnée recherchée.

Selon ce mode de réalisation, c'est le dispositif d'accès à une pluralité de contenus qui détermine les contenus résultants en appliquant une règle prédéterminée « ET », une règle prédéterminée « OU », ou les deux pour délivrer un maximum de résultats à l'utilisateur.

Selon un autre mode de réalisation particulier, ladite requête comprend en outre un indicateur de combinaison desdites au moins première et deuxième métadonnées recherchées, ladite étape de détermination prenant en compte ledit indicateur de combinaison.

Ainsi, il est possible au sein de cette requête d'augmenter la personnalisation de sa recherche en indiquant quel type de combinaison (à savoir « et/ou ») de métadonnées recherchées sélectionnées dans la pluralité de métadonnées associées au contenu de référence, la détermination automatique de contenus résultants selon l'invention doit mettre en œuvre.

En d'autres termes, selon ce mode de réalisation, c'est l'utilisateur qui précise au sein de la requête si l'étape de détermination prend en compte la règle « ET », « OU » ou les deux.

Une telle intervention de l'utilisateur peut être mise en œuvre grâce à un emplacement graphique dédié permettant optionnellement à l'utilisateur d'indiquer dans la première fenêtre graphique cet opérateur « ET » ou « OU », lorsque plusieurs métadonnées de recherche sont sélectionnées, et peut par exemple prendre la forme d'un menu déroulant avec les options « et », « ou », « et + ou ». En mode vocal, une telle indication peut être faite oralement, puis interprétée par le dispositif selon l'invention au moyen d'un outil de reconnaissance vocale.

Selon un autre mode de réalisation, lorsqu'au moins une première et une deuxième métadonnées recherchées sont sélectionnées par l'utilisateur dans ladite pluralité, ladite étape de détermination prend en compte un ordre de priorité prédéterminé entre ladite première et ladite deuxième métadonnée recherchées.

Par exemple, la détermination automatique selon l'invention peut privilégier un axe de recherche basé sur une métadonnée relative à l'acteur principal d'un contenu au regard d'une métadonnée relative au lieu de tournage de ce contenu.

Selon encore un autre mode de réalisation, le procédé selon l'invention comprend en outre une étape de restitution de ladite au moins une métadonnée recherchée dudit contenu résultant et de son niveau d'intensité.

Une telle restitution, vocale via un haut-parleur, ou visuelle via une fenêtre graphique, permet à l'utilisateur de comprendre pourquoi le contenu résultant a été extrait automatiquement de l'ensemble de contenus à disposition au moyen du procédé selon l'invention.

Ainsi, si deux métadonnées recherchées ont été sélectionnées par l'utilisateur et que le procédé selon l'invention délivre l'ensemble des contenus résultants comprenant : une des métadonnées, l'autre métadonnée ou les deux métadonnées, l'utilisateur pourra via cette étape de restitution de la deuxième métadonnée recherchée être assisté dans une étape ultérieure de sélection d'un desdits contenus résultants à restituer.

Selon encore un autre mode de réalisation, lorsque les restitutions selon l'invention sont effectuées au moyen de fenêtres graphiques, les fenêtres graphiques sont restituées sur un même écran ou sur une pluralité d'écrans communiquant avec une même carte graphique.

Une telle restitution permet à l'utilisateur de visualiser à la fois l'information représentative du contenu de référence, sa sélection de métadonnée(s) recherchée(s) parmi la pluralité de métadonnées du contenu de référence, et les contenus résultants obtenus à l'issue de l'étape de détermination de contenus selon l'invention qui tient compte des souhaits de métadonnées à rechercher définis par l'utilisateur relativement à un contenu de référence. Selon un aspect particulier, les deux fenêtres graphiques peuvent correspondre au cas d'un écran relié par un câble dvi à un autre dispositif de restitution également pourvu d'un écran, par exemple un ordinateur portable.

Selon cet exemple, il est possible de faire la saisie de la requête de sélection sur un écran dédié et de visualiser le ou le(s) contenu(s) résultants obtenu(s) ou les informations représentatives de ces contenus selon l'invention sur un écran, par exemple plus grand, lié à la même carte graphique que l'écran dédié à la saisie de l'utilisateur. Ce deuxième écran plus grand peut par exemple correspondre à un écran de rétroprojection dont la taille permet la restitution d'une liste de grande taille des contenus résultants, ou de leur informations représentatives respectives (correspondant par exemple à dix images (jaquettes de films)) représentatives de dix contenus multimédia résultants) configurées pour être visibles en tout point d'un amphithéâtre, notamment lorsqu'un mode « ludique » est mis en œuvre à des fins par exemple éducatives, et également la restitution pour chaque résultat de la ou des métadonnée(s) qui ont justifié son extraction automatique de l'ensemble de contenus à disposition lors de l'étape de détermination selon l'invention.

Les différents modes de réalisation mentionnés ci-dessus sont combinables entre eux pour la mise en œuvre de l'invention.

L'invention concerne également un dispositif d'accès à une pluralité de contenus à partir d'au moins une information représentative d'un contenu appartenant à un ensemble de contenus à disposition, dit contenu de référence, tel que défini dans la revendication 8.

Un tel dispositif d'accès à une pluralité de contenus est notamment adapté pour mettre en œuvre le procédé d'accès à une pluralité de contenus tel que décrit précédemment.

Ce dispositif pourra bien sûr comporter les différentes caractéristiques relatives au procédé d'accès à une pluralité de contenus, telles que décrites précédemment, qui peuvent être combinées ou prises isolément. Ainsi, les caractéristiques et avantages de ce dispositif d'accès à une pluralité de contenus sont les mêmes que ceux du procédé d'accès décrit précédemment. Par conséquent, ils ne sont pas détaillés plus amplement.

L'invention concerne également un terminal comprenant le dispositif d'accès à une pluralité de contenus mentionné ci-dessus.

Un tel terminal est par exemple une tablette, un téléphone portable, un smartphone (« téléphone intelligent »), un ordinateur personnel, un récepteur de télévision connecté à un réseau de communication etc.

Selon une implémentation, les différentes étapes du procédé d'accès à une pluralité de contenus tel que décrit précédemment sont mises en œuvre par un ou plusieurs logiciels ou programmes de module logiciel, comprenant des instructions logicielles destinées à être exécutées par un processeur de données d'un dispositif d'accès à une pluralité de contenus et étant conçu pour commander l'exécution des différentes étapes du procédé selon l'invention.

En conséquence, l'invention vise aussi un programme d'ordinateur, susceptible d'être exécuté par un ordinateur ou par un processeur de données, ce programme comportant des instructions pour commander l'exécution des étapes d'un procédé d'accès à une pluralité de contenus tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique (clé USB, SSD), ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes de module logiciel, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente de façon schématique une architecture dans laquelle est mise en œuvre le procédé d'accès à une pluralité de contenus selon l'invention ;
- la figure 2 présente la structure simplifiée d'un dispositif d'accès à une pluralité de contenus selon un mode de réalisation de l'invention ;
- la figure 3 présente de façon schématique les principales étapes d'un procédé d'accès selon l'invention ;
- les figures 4A à 4C présentent différents exemples d'interface permettant d'accéder à une pluralité de contenus selon l'invention ;
- la figure 5 illustre un exemple de mise en œuvre de l'étape de détermination selon l'invention.

### 5. Description d'un mode de réalisation de l'invention

### 5.1 Principe général

Le principe général de l'invention repose sur l'utilisation d'un premier contenu multimédia, dit de référence ou de départ, pour assister l'utilisateur dans la détermination de ses critères de recherche pour accéder à de nouveaux contenus multimédia.

En d'autres termes, au travers d'un contenu de départ dont les métadonnées sont restituées à l'utilisateur, l'utilisateur détermine les métadonnées qu'il souhaite retrouver dans les nouveaux contenus objets de sa recherche.

Une telle restitution permet à l'utilisateur de détecter puis de sélectionner un ou plusieurs éléments relatifs au contenu de référence qu'il souhaite également retrouver dans de nouveaux contenus. Selon un mode de réalisation général de l'invention, l'utilisateur sélectionne au moins un élément relatif au contenu de référence, c'est-à-dire au moins une métadonnée associée à ce contenu de référence selon un niveau d'intensité :
- non nul, lorsque l'utilisateur souhaite la présence de la métadonnée dans chaque nouveau contenu qu'il cherche,
- ou nul lorsque l'utilisateur souhaite l'absence de la métadonnée dans chaque nouveau contenu qu'il cherche.

Ainsi, grâce à l'invention l'utilisateur parvient à formaliser facilement et précisément l'objet de sa recherche, si bien que les contenus, conformes à ses critères de recherche et déterminés automatiquement, sont personnalisés.

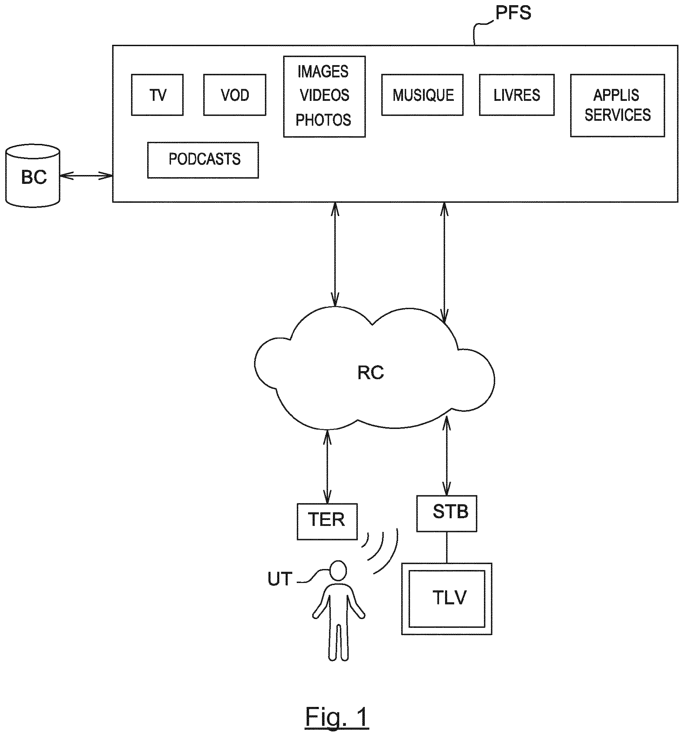

On présente tout d'abord en relation avec la **figure 1**, une architecture dans laquelle est mis en œuvre le procédé d'accès à une pluralité de contenus selon l'invention.

Une telle architecture comprend un terminal TER d'accès à des contenus proposés par une plateforme de service PFS, via un réseau de communication RC, tel que par exemple de type IP (abréviation anglaise de « Internet Protocol »). La plateforme de service PFS propose différents types de contenus à l'utilisateur UT du terminal TER, tels que par exemple:
- des contenus télévisuels TV, notamment ceux à diffusion programmée dans une grille de programmes,
- des catalogues VOD,
- des catalogues de vidéos et/ou d'images et/ou de photos,
- des catalogues de musique ou de podcasts,
- des catalogues de livres numériques,
- des catalogues d'applications et/ou de services.

L'architecture précitée permet à l'utilisateur UT du terminal TER d'avoir accès aux contenus proposés aussi bien en situation de mobilité qu'en situation de sédentarité.

En situation de mobilité, le terminal TER est par exemple un téléphone portable, un smartphone (« téléphone intelligent »), une tablette, un ordinateur portable, etc...

En situation de sédentarité, le terminal TER pourrait être un ordinateur personnel de type PC.

Toujours en situation de sédentarité, et comme représenté **sur la** **figure 1**, le terminal TER se compose par exemple :
- d'un terminal d'accès STB qui est apte à recevoir et à traiter les contenus en provenance de la plateforme PFS, et
- d'un terminal d'affichage, par exemple un téléviseur TLV tel que représenté sur la figure 1, apte à restituer à l'utilisateur UT les contenus traités par le terminal d'accès STB.

Dans un exemple de réalisation, le terminal d'accès et le terminal d'affichage sont regroupés en un seul terminal. Il pourrait par exemple s'agir d'un téléviseur contenant un décodeur de type set-top-box. Dans un autre exemple, le terminal d'accès STB est une set-top-box et le terminal TER est une tablette faisant office de terminal d'affichage connecté à la set-top-box au moyen d'un réseau local, par exemple sans fil, en particulier du type WiFi ou CPL (abréviation de « courants porteurs en ligne »).

Le terminal d'accès STB, de même que le terminal TER, comprennent en outre des moyens de connexion au réseau de communication RC qui peuvent être, par exemple, de type x-DSL, fibre ou encore 3G et 4G. Selon l'invention, la plateforme de service PFS dialogue avec un ensemble de contenus à disposition, appelé base de connaissance BC qui, pour chaque contenu proposé par ladite plateforme, contient une indexation préalable de chaque contenu par métadonnées.

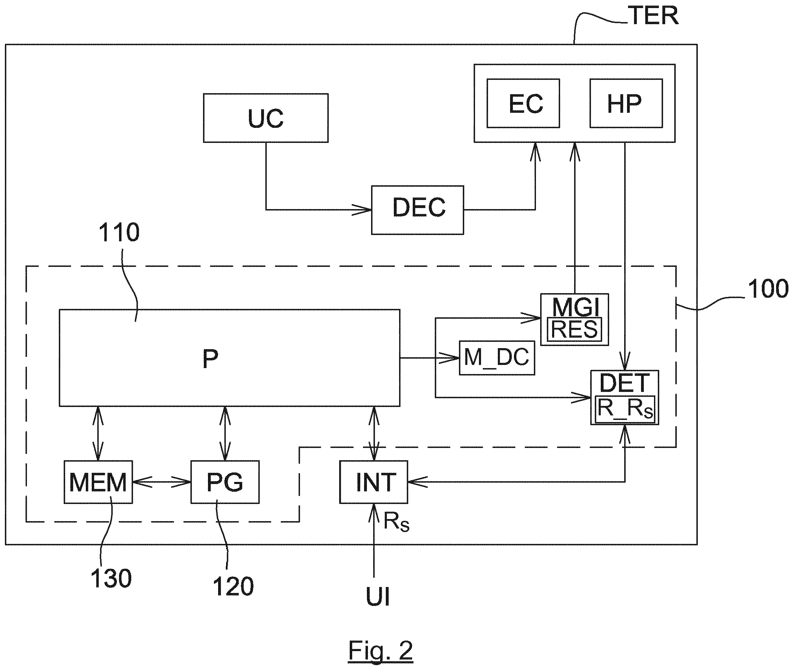

En relation avec **la** **figure 2**, on considère maintenant la structure simplifiée d'un dispositif 100 d'accès à une pluralité de contenus, selon un exemple de réalisation de l'invention. Un tel dispositif d'accès est adapté pour mettre en œuvre le procédé d'accès à une pluralité de contenus selon l'invention qui va être décrit ci-dessous.

Dans cet exemple, le dispositif de contrôle d'accès 100 est intégré dans un terminal TER tel que représenté sur **la** **figure 1**, par exemple un smartphone.

Dans l'exemple représenté à la **figure 2**, le dispositif 100 comprend une unité de traitement 110, équipée par exemple d'un processeur P, et pilotée par un programme d'ordinateur PG 120, stocké dans une mémoire MEM 130 et mettant en œuvre le procédé d'accès à une pluralité de contenus selon l'invention. Le terminal TER comprend une unité de communication UC qui contient un module d'émission/réception adapté pour :
- émettre une requête d'accès à une pluralité de contenus mis à disposition dans la plateforme de service PFS de la **figure 1**, à partir de la sélection d'au moins une métadonnée d'un contenu de référence,
- recevoir la pluralité de contenus associée à la métadonnée sélectionnée.

A l'initialisation, les instructions de code du programme d'ordinateur PG 120 sont par exemple chargées dans une mémoire RAM (non représentée) avant d'être exécutées par le processeur P de l'unité de traitement 110. Le processeur de l'unité de traitement 110 met en œuvre les étapes du procédé d'accès à une pluralité de contenus qui va être décrit ci-dessous, selon les instructions du programme d'ordinateur 120.

De façon connue en tant que telle, le terminal TER comprend :
- un module INT de traitement des interactions utilisateurs UI,
- un écran de visualisation EC,
- un haut-parleur HP,
- une interface DEC de décodage audio/vidéo des signaux texte, audio, vidéo ou audiovisuels représentatifs des contenus reçus, ladite interface étant adaptée pour transmettre les signaux décodés à l'écran EC ou dans le haut-parleur HP.

Selon l'invention, le dispositif d'accès 100 comprend en outre des moyens de génération d'interface MGI comprenant notamment un module de restitution RES d'une pluralité de métadonnées du contenu de référence, des moyens DET de détection d'interactions utilisateur comprenant notamment un module de réception R_Rs d'une requête de sélection Rs dans la pluralité de métadonnées du contenu de référence d'au moins une métadonnée, dite métadonnée recherchée, et un module de détermination M_DC d'au moins un contenu résultant présentant un niveau d'intensité de ladite au moins une métadonnée recherchée dans ledit ensemble de contenus à disposition, ledit module de restitution RES restituant ledit au moins un contenu résultant ou au moins une information représentative dudit au moins un contenu résultant.

Ces moyens et modules seront décrits plus en détail dans la suite de la description, et sont pilotés par le processeur P de l'unité de traitement 110.

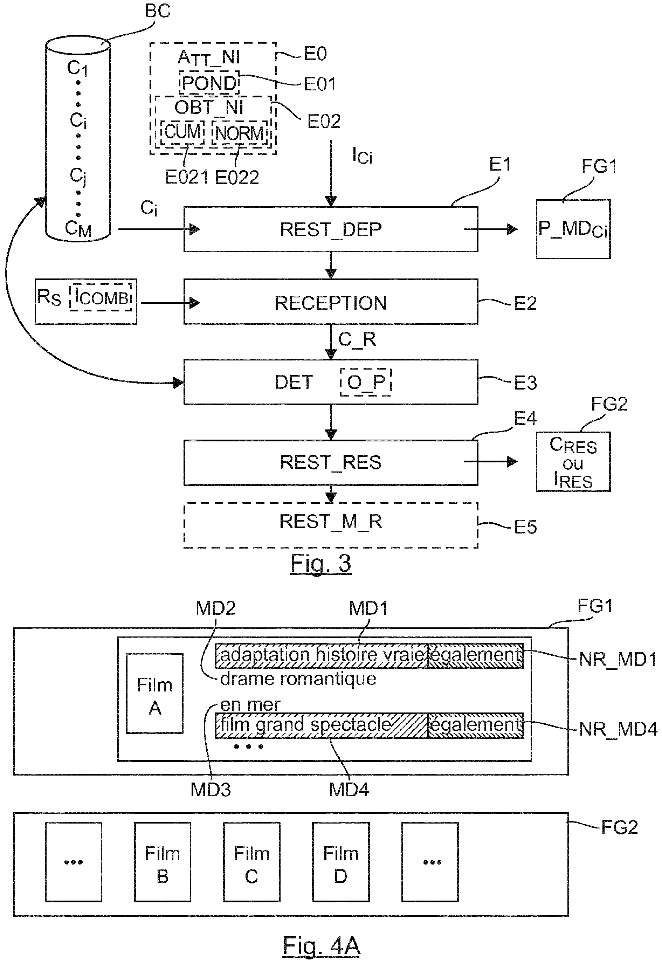

En relation avec la **figure 3**, on présente maintenant les étapes du procédé d'accès à une pluralité de contenus conformément à un mode de réalisation selon l'invention. Dans le mode de réalisation représenté, le procédé d'accès est mis en œuvre par le terminal TER représenté sur les **figures 1** **et** **2**.

Au cours d'une étape E1 représentée sur la **figure 3**, il est procédé à la restitution, par exemple visuelle, sur une première fenêtre graphique affichée FG1 affichée sur l'écran EC, d'une pluralité P_MD_{Ci} de P (P étant un entier) métadonnées MD1.... MDP d'un premier contenu Ci, dit contenu de référence, appartenant à un ensemble de M contenus à disposition au sein de la base de connaissance BC représentée sur la **figure 1**.

Un tel contenu de référence Ci est, selon le mode de réalisation illustré par la **figure 3**, identifié au moyen d'une information représentative ICi, telle qu'un titre ou une image représentative de ce contenu multimédia (l'image étant par exemple extraite du contenu multimédia, par exemple un contenu vidéo, ou correspondant à la jaquette qui lui est associée).

L'information représentative de ce contenu de référence Ci peut être saisie manuellement, ou vocalement, par l'utilisateur UT au moyen de interface graphique générée par les moyens MGI de génération d'interface, ou d'un outil de saisie vocale respectivement, du dispositif selon l'invention représenté par la **figure 2**, ou sélectionnée manuellement ou vocalement dans une liste prédéfinie restituée au préalable à l'utilisateur UT sur l'écran EC du terminal TER représenté sur la **figure 2**, ou encore présentée automatiquement à l'utilisateur UT sur ce même écran EC lorsqu'il s'agit par exemple du dernier contenu restitué par le module de restitution RES du terminal TER représenté sur la **figure 2**.

Par exemple, l'utilisateur UT souhaite trouver des contenus multimédia correspondants à des films à partir du dernier film (i.e. le contenu de référence selon l'invention) qu'il vient de visionner.

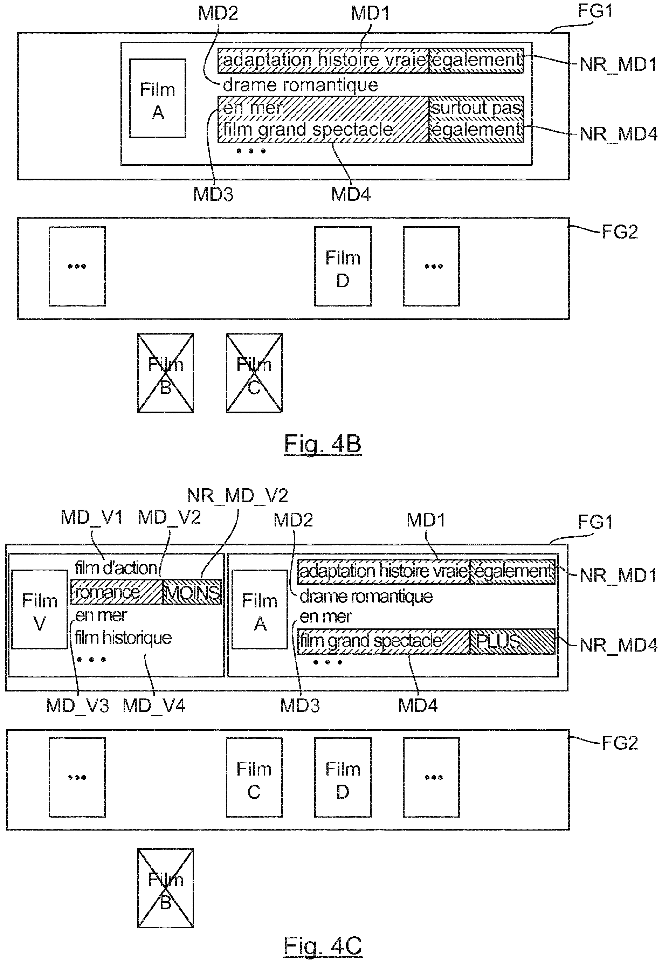

La première étape E1 de restitution correspond par exemple à une menu déroulant contenant les métadonnées MD1 « adaptation histoire vraie », MD2 « drame romantique », MD3 « en mer », MD4 « film grand spectacle » tel qu'illustré par la suite dans l'exemple de mise en œuvre représenté par la **figure 4A**.

Au cours d'une étape E2 représentée sur la **figure 3**, le module de réception R_Rs reçoit une requête Rₛ de sélection dans ladite pluralité P_MD_{Ci} d'au moins une métadonnée, dite métadonnée recherchée.

Plus précisément, une telle sélection effectuée par l'utilisateur UT est traitée par le module INT de traitement des interactions utilisateur représenté sur la **figure 2**, ce qui déclenche l'envoi, à destination de la plateforme PFS de la **figure 1**, via le module de communication UC du terminal TER, de la requête Rₛ.

Une telle requête Rₛ correspond par exemple à une identification, au sein de la première fenêtre graphique FG1, par surlignage, selon une couleur ou un motif prédéterminé, par exemple rouge, dans la pluralité de métadonnées P_MD_{Ci} des métadonnées MD1 : « adaptation histoire vraie », et MD4 : « film grand spectacle », suite à un click de souris par l'utilisateur UT sur ces métadonnées, selon l'exemple de mise en œuvre représenté par la **figure 4A**, mais pourrait également correspondre à une case cochée par l'utilisateur UT pour chaque métadonnée qu'il souhaite sélectionner.

Il est à noter que selon un aspect de l'invention, l'utilisateur UT peut définir en outre un niveau d'intensité NR de la métadonnée recherchée au sein de la requête Rₛ, et ce relativement au contenu de référence Ci.

Par exemple, au regard de l'exemple de mise en œuvre illustré par la **figure 4A**, l'utilisateur souhaite un « dosage » équivalent de la métadonnée MD1 : « adaptation histoire vraie » du contenu de référence Ci, dans les nouveaux contenus auquel il souhaite accéder en utilisant le procédé d'accès à une pluralité de contenu selon l'invention.

Pour ce faire, au regard de la **figure 4A**, le niveau de dosage est par exemple identifié par l'utilisateur UT, au sein de la première fenêtre graphique FG1, par surlignage du niveau « également » de la métadonnée MD1 par exemple sélectionné au sein d'un menu déroulant comprenant des appréciations tel que « également », « surtout pas », « plus », « moins », ...

Optionnellement (non représenté), il est également possible que la requête Rₛ comprennent une métadonnée additionnelle au regard des métadonnées recherchées sélectionnées au sein de la pluralité de métadonnées P_MD_{Ci}. Pour ce faire, l'utilisateur UT peut par exemple saisir dans un champ dédié de la première fenêtre graphique FG1 cette métadonnée additionnelle (et son niveau d'intensité le cas échéant).

En d'autres termes, cet aspect permet à l'utilisateur d'ajouter un « ingrédient » additionnel à sa « recette » de métadonnées concoctée à partir du contenu de référence Ci. L'utilisateur UT dispose donc grâce à l'invention d'outils pour l'assister dans la personnalisation de sa recherche de nouveaux contenus.

A réception de cette requête Rₛ, au cours d'une étape E3 représentée sur la **figure 3****,** la plateforme PFS dialogue avec la base de connaissance BC, également représentée sur la **figure 1**, en vue de déterminer au moins un contenu résultant présentant un niveau d'intensité de ladite au moins une métadonnée recherchée. Les contenus ainsi déterminés peuvent être du texte, du son (ou de l'audio), des images, des vidéos, des applications/services ou encore toute combinaison de ces différents éléments.

Selon un mode de réalisation (non représenté), la présente invention est appliquée à la base de connaissance BC comprenant des contenus auxquels des niveaux d'intensité de métadonnée ont été préalablement alloués.

Optionnellement, tel que représenté en pointillés sur **la** **figure 3**, le procédé selon l'invention comprend une telle étape préalable E0 d'attribution d'un niveau d'intensité NI, à au moins une métadonnée MD, dite métadonnée à quantifier, de chaque contenu de l'ensemble de contenus à disposition dans la base de connaissance BC.

Il est à noter que toutes les métadonnées d'un contenu ne peuvent être quantifiées par plus de deux niveaux d'intensité NI. Par exemple, une métadonnée portant sur un acteur, un réalisateur, un auteur, ou encore un chanteur ne peut être quantifiée que par un niveau identique au contenu de référence ou un niveau nul, lorsqu'on vise à exclure un artiste.

En revanche, une métadonnée relative à un thème, à une période de fiction, à un instrument, une durée peut être quantifiée au moyen d'un nombre quelconque de niveaux d'intensité.

Une telle étape préalable d'attribution E0 comprend par exemple les sous-étapes suivantes mises en œuvre pour ladite métadonnée à quantifier:
- pondération E01 prédéterminée d'au moins un mot-clé associé à ladite métadonnée à quantifier et/ou pondération E01 d'une combinaison prédéterminée d'une pluralité de mots-clés associés à ladite métadonnée à quantifier, délivrant un ou plusieurs poids attribués à ladite métadonnée à quantifier,
- obtention E02 dudit niveau d'intensité de ladite métadonnée à quantifier après cumulation E021 des poids obtenus lors de ladite étape de pondération et normalisation E022 du résultat de ladite cumulation E021.

Par exemple, pour la métadonnée MD1 « Grand Spectacle » du contenu de référence Ci, les mots-clés suivants (les mots-clés étant préalablement répartis en catégories prédéterminées de mots-clés) ont été recensés, et un code, par exemple binaire, leur a été attribué :
- « impossible de s'endormir » (0000) de la catégorie « humeurs » (« *moods* » en anglais),
- « bouche bée » (0001) de la catégorie « humeurs »,
- « batailles historiques » (0100) de la catégorie « thème »,
- « aventures futuristes » (0101) de la catégorie « thème »,
- « Plein les yeux » (0010) de la catégorie « tonalité » (« *tones* » en anglais),
- « Catastrophe naturelle » (0011) de la catégorie « genre »,
- « Film d'action » (0110) de la catégorie « genre »,
- « Fin du monde » (0111) de la catégorie « genre »
- « mer » (1001) de la catégorie « genre »,
- « Merveilleux héroïque (en anglais « heroic fantasy ») » (1010) de la catégorie « genre »,
- « Epouvante » (1011) de la catégorie « genre »,
- « Effets spéciaux » (1000) de la catégorie « drapeau » (« *flags* » en anglais).

Des règles de pondération sont par ailleurs définies, par exemple par un fournisseur de services, chaque règle correspondant à un mot-clé associé à la métadonnée ou à une combinaison de mots-clés associés à la métadonnée reflétant un caractère particulier de cette métadonnée.

Par exemple, pour la métadonnée « Grand Spectacle », chaque règle est identifiée par un code qui est associé:
- soit au code représentatif d'un unique mot-clé constitutif de la règle considérée,
- soit à la combinaison des codes représentatifs respectivement des mots-clés constitutifs de la règle considérée.

Six exemples de règles sont illustrés dans chaque ligne du tableau suivant :

| Règle | Poids | humeur | thème | genre | tonalité | drapeau |
|---|---|---|---|---|---|---|
| 1 | 4 | | | 1010 | | |
| 2 | 2 | 0000, 0001 | | -1011 | 0010 | |
| 3 | 4 | | | 0110, 0111 | | |
| 4 | 2 | | | | | 1000 |
| 5 | 4 | | 0100, 0101 | | | |
| 6 | 1 | | | 0011, 1001 | | |

Le tableau comprend une colonne « Règle », une colonne « Poids » elle-même suivie d'une ou plusieurs colonnes « Catégorie ». Dans l'exemple représenté, le tableau comprend cinq colonnes « Catégorie » intitulées « humeur », « thème », « genre », « tonalité » et « drapeau ».

Dans le tableau, un unique mot-clé est constitutif des règles 1 et 4, tandis qu'une combinaison de mots-clés est constitutive des règles 2, 3, 5 et 6.

Les cases contenant un signe négatif indiquent que pour que la règle soit satisfaite il faut que le mot-clé précédé du signe négatif « - » soit exclu et que les autres mots-clés de métadonnée dont les codes figurent sur la ligne de la règle soient présents dans le contenu analysé.

Ainsi, pour chaque contenu de la base de connaissance BC, un poids sera attribué à la métadonnée « Grand Spectacle » lorsqu'une des règles ci-dessus sera satisfaite. La validation d'une règle consiste à vérifier si le contenu présente explicitement au moins un code représentatif d'un mot-clé par colonne « catégorie » constitutive de la règle à valider.

Par exemple, la présence du code 0110 validera la règle 3 du tableau ci-dessus.

Dans le cas où un ou plusieurs mots-clés sont codés sous forme négative, comme le mot-clé de la case du tableau qui est commune à la règle 2 et à la catégorie « genre », la validation de la règle consiste en outre à vérifier que ledit contenu ne possède aucun de ces mots-clés codés sous forme négative.

Par exemple, la règle 2 sera validée dans les cas de combinaisons de codes suivantes :
- 0000 0001 -1011 0010,
- 0001 -1011 0010,
- 0000 -1011 0010.

En conséquence, si le contenu satisfait à au moins une règle alors la métadonnée correspondante lui est associée avec un certain poids.

Selon l'exemple relatif à la métadonnée « Grand Spectacle », six règles correspondant respectivement aux poids 4, 2, 4, 2, 4, 1 peuvent être satisfaites ce qui représente un poids total égal à dix-sept.

Or, sachant que les métadonnées n'ont pas forcément le même nombre de règles et que les poids associés sont divers, il convient de normaliser le score obtenu pour la métadonnée à quantifier.

Ainsi, si un contenu Ci ne satisfait qu'aux règles 1 et 3, seuls les codes correspondants sont détectés et la métadonnée « Grand Spectacle » obtient un poids cumulé E021 égal à 8, qui après normalisation E022 (division par dix-sept) devient un niveau d'intensité normalisé égal à 0,47 qui peut être représenté par un curseur à 4,7 sur 10 ou un niveau de 4,7 pour une barre de niveau comprenant 10 niveaux, ou encore 4,7 étoiles sur 10 étoiles, etc.

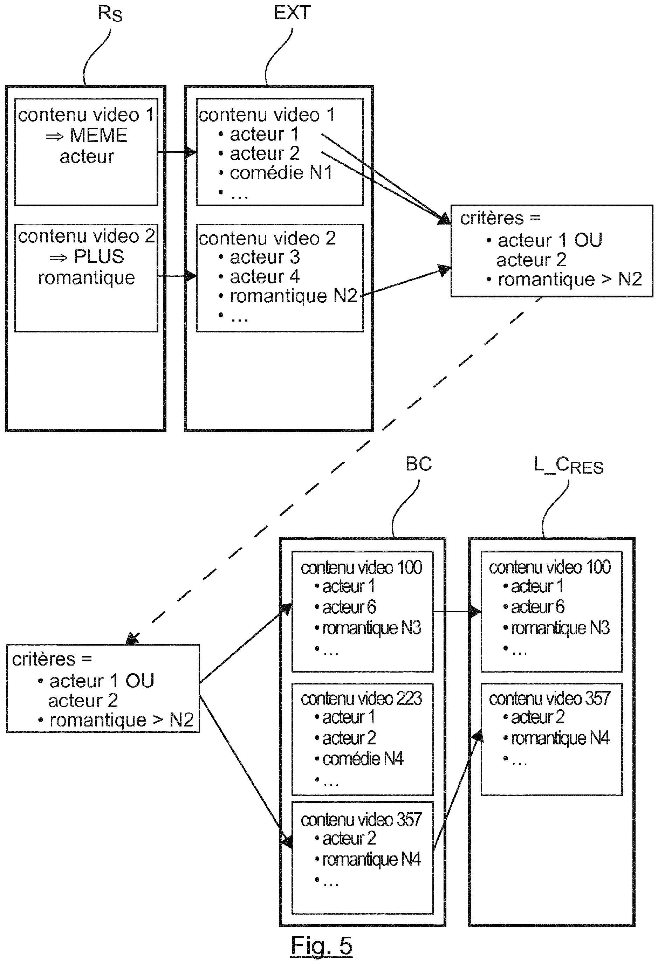

Un exemple de mise en œuvre de l'étape de détermination E3 selon l'invention est représenté sur **la** **figure 5****.**

Selon cet exemple représenté en relation avec la **figure 5**, les contenus sont des contenus vidéo.

A partir de deux contenus de référence, « contenu vidéo 1 » et « contenu vidéo 2 » deux critères de recherche sont par exemple définis dans la requête de sélection Rₛ, à savoir retrouver, dans les nouveaux contenus que l'utilisateur UT cherche à découvrir, la métadonnée « acteur » du contenu vidéo 1 et/ou la métadonnée « romantique » du contenu vidéo 2, avec un niveau d'intensité égal au niveau d'intensité de la métadonnée « acteur » (en d'autres termes on souhaite retrouver le ou les mêmes acteurs) et un niveau d'intensité supérieur au niveau d'intensité du genre « romantique » dans le contenu vidéo 2.

Au vu de ces critères de recherche définis au sein de la requête Rₛ, le module de détermination M_DC interprète ces critères de recherche en extrayant EXT tout d'abord des contenus de référence « contenu vidéo 1 » et « contenu vidéo 2 » l'identité des acteurs du contenu vidéo 1, à savoir acteur 1 et acteur 2, et le niveau de la métadonnée romantique du contenu vidéo 2 à savoir N2. Une telle interprétation permet en outre de « traduire » les expressions utilisées par l'utilisateur telle que « surtout pas » ou « plus » en niveau d'intensité. L'expression « surtout pas » correspondant par exemple à un niveau d'intensité N0, et le « plus » (respectivement « moins ») correspondant à l'opérateur « > » (respectivement « < »).

Puis, le module de détermination M_DC extrait de la base de connaissance BC, comprenant par exemple les contenus vidéo 100, 223 et 357, des nouveaux contenus, appelés contenus résultants, distincts des contenus de référence « contenu vidéo 1 » et « contenu vidéo 2 ».

Par exemple, en relation avec **la** **figure 5**, parmi les contenus vidéo 100, 223 et 357 seuls les contenus vidéo 100 et 357 de la liste L_C_{RES} résultent de l'étape de détermination E3.

En effet, le contenu 100 présente à la fois l'acteur 1 du contenu de référence vidéo 1 et un niveau d'intensité N3 de la métadonnée « romantique », ce qui est bien supérieur au niveau N2 de la métadonnée « romantique » du contenu de référence vidéo 1, et le contenu 357 présente à la fois l'acteur 2 du contenu de référence vidéo 2 et un niveau d'intensité N4 de la métadonnée « romantique », lequel est bien supérieur au niveau N2 de la métadonnée « romantique » du contenu de référence vidéo 2.

En revanche, le contenu vidéo 223 n'a pas été retenu lors de l'étape de détermination E3 car il ne présentait pas la métadonnée « romantique ».

Selon l'exemple illustré en relation avec la **figure 5**, il est à noter que par défaut les acteur 1 et acteur 2 de la métadonnée « acteur », ont été pris en compte lors de l'étape de détermination E3 avec l'opérateur logique « OU » et que les deux métadonnées « acteur » et « romantique » ont été combinées par défaut avec l'opérateur logique « ET ».

Selon ce mode de réalisation, c'est donc le dispositif d'accès à une pluralité de contenus, à savoir le terminal TER, qui impose par défaut le type de combinaison à appliquer « ET », une règle « OU », ou les deux pour délivrer un maximum de résultats à l'utilisateur.

Selon une autre option de réalisation, représentée en pointillé **sur la** **figure 3**, l'utilisateur UT peut spécifier au sein de la requête un indicateur de combinaison I_{COMB} des métadonnées.

Selon un autre mode de réalisation optionnel représenté en pointillé sur **la** **figure 3**, l'étape de détermination E3 prend en compte un ordre de priorité O_P prédéterminé entre les première et deuxième métadonnées recherchées.

Par exemple, la détermination automatique selon l'invention peut privilégier un axe de recherche basé sur une métadonnée relative à l'acteur principal d'un contenu au regard d'une métadonnée relative au genre « romantique », ce qui peut permettre de délivrer un résultat lorsqu'aucun contenu de la base de connaissance BC ne peut satisfaire la combinaison selon l'opérateur « ET » des métadonnées de recherche. Selon un mode de réalisation particulier, la prise en compte de cet ordre de priorité est activée uniquement lorsque la recherche combinatoire par défaut n'a délivré aucun résultat.

Puis, la plateforme PFS renvoie au terminal TER, via le réseau de communication RC, la liste L_C_{RES} dont un exemple est représenté sur la **figure 5**, et au cours d'une étape E4 représentée sur la **figure 3**, il est procédé à la restitution, par exemple visuelle ou vocale, du résultat de l'étape de détermination E3. A cet effet, les contenus résultants C_{RES} de la liste L_C_{RES} ou bien une ou plusieurs informations I_{RES} relatives aux contenus résultants sont affichés, par exemple visuellement sur une deuxième fenêtre graphique FG2 (qui peut éventuellement être confondue avec la première fenêtre graphique FG1 ou superposée à cette dernière) de l'écran EC du terminal TER, à l'aide des moyens MGI de génération d'interface de la **figure 2**.

Lorsque le terminal TER a un écran de petite taille ou en situation de mobilité, une telle liste peut-être fournie de façon sonore, à l'aide du haut-parleur HP représenté à la **figure 2**. Dans cet exemple, chaque contenu de la liste L_C_{RES} est présenté oralement à l'utilisateur en mentionnant notamment une information représentative du contenu résultant I_{RES}:
- le type auquel appartient le contenu (ex : photo, film, musique, livre, etc...),
- le titre du contenu,
- etc....

Pour passer d'un contenu au suivant, l'utilisateur UT prononce par exemple le mot « suivant ». Pour passer à un contenu précédent, l'utilisateur UT prononce par exemple le mot « précédant ».

Lorsque l'écran EC du terminal TER a un écran de taille suffisamment grande ou en situation de sédentarité, une telle liste peut-être fournie de façon visuelle, à l'aide dudit écran EC. Dans cet exemple, les contenus apparaissent dans une liste. Chaque contenu de la liste est identifié notamment par une information I_{RES} représentative du contenu résultant, telle qu'un titre ou une image représentative de ce contenu multimédia (l'image étant par exemple extraite du contenu multimédia, correspondant par exemple au contenu vidéo, ou correspondant à la jaquette qui lui est associée).

L'utilisateur UT a alors la possibilité d'atteindre tel ou tel contenu de la liste à l'aide d'un curseur ou de façon tactile.

Optionnellement, au cours d'une étape E5 représentée sur la **figure 3**, les critères de recherche, à savoir les métadonnées sélectionnés par l'utilisateur dans la pluralité de métadonnées du contenu de référence sont également restitués afin de permettre à l'utilisateur de comprendre pourquoi le ou les contenu(s) résultant(s) ont été extraits automatiquement de l'ensemble de contenus à disposition au moyen du procédé selon l'invention.

### 5.2 Exemples détaillés de mise en oeuvre

On présente en relation avec les **figures 4A à 4C**, trois exemples d'interface graphique lors de la mise en œuvre du procédé selon l'invention par le terminal TER de **la** **figure 2**.

Selon l'exemple représenté par la **figure 4A**, l'utilisateur UT a regardé dernièrement le contenu correspondant au film A dont le titre est « Britannic » et il a adoré ce film. Il aimerait retrouver un ressenti similaire avec un autre film mais éprouve des difficultés à formuler l'objet de sa recherche pour accéder à de nouveaux contenus avec les méthodes classiques de l'art antérieur qui supposent une connaissance préalable et précise de ce à quoi on souhaite accéder.

Selon l'invention, partant du film A « Britannic », une pluralité de métadonnées MD1, MD2, MD3, et MD4 de ce contenu sont restitués visuellement à l'utilisateur via la fenêtre graphique FG1 sur l'écran EC du terminal TER de l'utilisateur UT.

L'utilisateur UT sélectionne alors tactilement ou au moyen d'un curseur les métadonnée MD1 et MD4 : « adaptation histoire vraie» et « film grand spectacle » respectivement. Une telle sélection met par exemple en œuvre un surlignage des métadonnées sélectionnées MD1 et MD4 au regard des métadonnées non sélectionnées MD2 et MD3.

En outre, selon le mode de réalisation représenté sur la **figure 4A**, l'utilisateur indique le niveau d'intensité (NR_MD1 et NR_MD4) de ces métadonnées à savoir « également ». En d'autres termes, l'utilisateur UT souhaite accéder à de nouveaux contenus qui présenteront « également » les métadonnées MD1 et MD4.

L'étape de détermination E3 selon l'invention telle que décrite précédemment délivre alors en temps réel la liste L_C_{RES} de contenus résultants comprenant notamment les film B, C et D correspondant respectivement aux films qui sont à la fois des adaptations d'histoire vraie et des films grand spectacle, tels que par exemple « Titanic », « Tempête » et « Vol 93 ».

Selon l'exemple représenté par la **figure 4B**, l'utilisateur UT a des souhaits identiques à l'exemple illustré selon la **figure 4A**, utilisant pour contenu de référence le film A dont le titre est « Britannic ». Toutefois, l'utilisateur souhaite personnaliser sa recherche en sélectionnant en outre la métadonnée « en mer » et en spécifiant le niveau d'intensité de celle-ci au moyen de l'expression « surtout pas ».

En effet, l'utilisateur ne souhaite par exemple pas visionner deux soirs de suite des films se déroulant en mer.

Dans ce deuxième cas, l'étape de détermination E3 selon l'invention telle que décrite précédemment délivre alors en temps réel la liste L_C_{RES} de contenus résultants qui, au regard de la **figure 4A**, ne comprend plus que le film D intitulé « Vol 93 », les films B et C correspondant à « Titanic » et « Tempête » ayant été exclus du fait qu'ils se déroulaient en mer.

Enfin, selon l'exemple représenté par la **figure 4B**, l'utilisateur UT a des souhaits identiques à l'exemple illustré selon la **figure 4A**, utilisant pour contenu de référence le film A dont le titre est « Britannic ». Toutefois, il souhaite personnaliser sa recherche en sélectionnant en outre la métadonnée « romantique » et en spécifiant le niveau d'intensité de celle-ci, cette fois-ci relativement à un autre contenu qui est le film V intitulé par exemple « Coup de Foudre à Notting Hill », au moyen de l'expression « moins ».

Dans ce troisième cas, l'étape de détermination E3 selon l'invention telle que décrite précédemment délivre alors en temps réel la liste L_C_{RES} de contenus résultants qui, au regard de la **figure 4A**, ne comprend plus que les films C et D intitulés respectivement « Tempête » et « Vol 93 », le film B correspondant à « Titanic » ayant été exclu du fait que son niveau d'intensité de la métadonnée « romantique » n'était pas inférieur au niveau d'intensité de la métadonnée « romantique » du film V intitulé « Coup de Foudre à Notting Hill ».

L'invention qui vient d'être décrite ci-dessus est particulièrement bien adaptée pour proposer l'accès à une pluralité de contenus, aussi bien en situation de sédentarité que de mobilité.

## Revendications

1. Procédé d'accès à une pluralité de contenus à partir d'au moins une information représentative d'au moins un contenu, dit contenu de référence (Ci), appartenant à un ensemble (BC) de contenus à disposition, , ledit procédé étant **caractérisé en ce qu'**il comprend les étapes suivantes, mises en œuvre par un processeur :
- restitution (E1) d'une pluralité de métadonnées (MD) dudit contenu de référence,
- réception (E2) d'une requête (Rₛ) de sélection dans ladite pluralité de métadonnées (MD) dudit contenu de référence, d'au moins une métadonnée, dite métadonnée recherchée, ladite métadonnée recherchée étant associée à un niveau d'intensité de référence dans ledit contenu de référence, un niveau d'intensité (N) étant défini dans la requête de sélection, ledit niveau d'intensité (N) indiquant, relativement audit niveau d'intensité de référence, dans quelle proportion dudit niveau d'intensité de référence ladite métadonnée recherchée doit être présente dans au moins un autre contenu à déterminer dans ledit ensemble (BC) de contenus à disposition;
- détermination (E3) dans ledit ensemble (BC) de contenus à disposition, dudit au moins un autre contenu, dit contenu résultant, présentant ledit niveau d'intensité (N) de ladite au moins une métadonnée recherchée, et
- restitution (E4) dudit au moins un contenu résultant ou d'au moins une information (I_{RES}) représentative dudit au moins un contenu résultant (C_{RES}).

2. Procédé d'accès à une pluralité de contenus selon la revendication 1, **caractérisé en ce que** ledit niveau d'intensité défini relativement audit contenu de référence appartient au groupe comprenant au moins :
- un même niveau d'intensité de ladite métadonnée recherchée que celui dudit contenu de référence,
- un niveau d'intensité de ladite métadonnée recherchée supérieur à celui dudit contenu de référence,
- un niveau d'intensité de ladite métadonnée recherchée inférieur à celui dudit contenu de référence,
- un niveau d'intensité de ladite métadonnée recherchée nul.

3. Procédé d'accès à une pluralité de contenus selon la revendication 1, **caractérisé en ce que** lorsqu'au moins des première et deuxième métadonnées recherchées sont sélectionnées par l'utilisateur dans ladite pluralité, ladite requête comprend :
- pour ladite première métadonnée recherchée, une information représentative d'un premier niveau d'intensité défini par l'utilisateur relativement audit contenu de référence, et
- pour ladite deuxième métadonnée recherchée, une information représentative d'un deuxième niveau d'intensité défini par l'utilisateur relativement audit contenu de référence,
et **en ce que** ladite étape de détermination délivre ledit au moins un contenu résultant présentant ledit premier niveau d'intensité de ladite première métadonnée recherchée et/ou ledit deuxième niveau d'intensité de ladite deuxième métadonnée recherchée.

4. Procédé d'accès à une pluralité de contenus selon la revendication 3, **caractérisé en ce que** ladite requête (Rₛ) comprend en outre un indicateur (I_{COMB}) de combinaison desdites au moins première et deuxième métadonnées recherchées, ladite étape de détermination prenant en compte ledit indicateur de combinaison.

5. Procédé d'accès à une pluralité de contenus selon la revendication 1, **caractérisé en ce que** lorsqu'au moins une première et une deuxième métadonnées recherchées sont sélectionnées par l'utilisateur dans ladite pluralité, ladite étape de détermination prend en compte un ordre de priorité (O_P) prédéterminé entre ladite première et ladite deuxième métadonnée recherchées.

6. Procédé d'accès à une pluralité de contenus selon la revendication 1, **caractérisé en ce qu'**il comprend en outre une étape de restitution (E5) de ladite au moins une métadonnée recherchée dudit contenu résultant et de son niveau d'intensité.

7. Procédé d'accès à une pluralité de contenus selon la revendication 1, **caractérisé en ce que** lesdites étapes de restitution sont effectuées au moyen de fenêtres graphiques, et **en ce que** lesdites fenêtres graphiques sont restituées sur un même écran ou sur une pluralité d'écrans communiquant avec une même carte graphique.

8. Dispositif (100) d'accès à une pluralité de contenus à partir d'au moins une information représentative d'un contenu, dit contenu de référence (Ci), appartenant à un ensemble de contenus (BC) à disposition, ledit dispositif étant **caractérisé en ce qu'**il comprend :
- un module de restitution (RES) d'une pluralité de métadonnées dudit contenu de référence,
- un module de réception (R_Rₛ) d'une requête de sélection (Rₛ) dans ladite pluralité de métadonnées (MD) dudit contenu de référence, d'au moins une métadonnée, dite métadonnée recherchée, , ladite métadonnée recherchée étant associée à un niveau d'intensité de référence dans ledit contenu de référence, un niveau d'intensité (N) étant défini dans la requête de sélection, ledit niveau d'intensité (N) indiquant, relativement audit niveau d'intensité de référence, dans quelle proportion dudit niveau d'intensité de référence ladite métadonnée recherchée doit être présente dans au moins un autre contenu à déterminer dans ledit ensemble (BC) de contenus à disposition;
- un module de détermination (M_DC) dans ledit ensemble (BC) de contenus à disposition, dudit au moins un autre contenu, dit contenu résultant, présentant ledit niveau d'intensité de ladite au moins une métadonnée recherchée ledit module de restitution (RES) restituant ledit au moins un contenu résultant ou au moins une information représentative dudit au moins un contenu résultant.

9. Terminal (TER) contenant un dispositif selon la revendication 8.

10. Programme d'ordinateur comportant des instructions de code de programme pour l'exécution des étapes du procédé d'accès à une pluralité de contenus à partir d'au moins une information représentative d'un contenu sélectionné par l'utilisateur selon l'une quelconque des revendications 1 à 7, lorsque ledit programme est exécuté par un ordinateur.

11. Support d'enregistrement lisible par un ordinateur sur lequel est enregistré un programme d'ordinateur comprenant des instructions de code de programme pour l'exécution des étapes du procédé d'accès à une pluralité de contenus à partir d'au moins une information représentative d'un contenu sélectionné par l'utilisateur selon l'une quelconque des revendications 1 à 7, lorsque ledit programme est exécuté par un ordinateur.

## Patentansprüche

1. Verfahren zum Zugriff auf eine Vielzahl von Inhalten anhand wenigstens einer Information, die für wenigstens einen Inhalt, Referenzinhalt (Ci) genannt, der einer Menge (BC) von verfügbaren Inhalten angehört, repräsentativ ist, wobei das Verfahren **dadurch gekennzeichnet ist, dass** es die folgenden Schritte umfasst, die von einem Prozessor ausgeführt werden:
- Wiedergabe (E1) einer Vielzahl von Metadaten (MD) des Referenzinhalts,
- Empfang (E2) einer Anforderung (Rₛ) zur Auswahl, in der Vielzahl von Metadaten (MD) des Referenzinhalts, wenigstens eines Metadatums, gesuchtes Metadatum genannt, wobei das gesuchte Metadatum einem Referenzintensitätsniveau in dem Referenzinhalt zugeordnet ist, wobei ein Intensitätsniveau (N) in der Auswahlanforderung definiert ist, wobei das Intensitätsniveau (N) angibt, in Bezug auf das Referenzintensitätsniveau, in welchem Anteil des Referenzintensitätsniveaus das gesuchte Metadatum in wenigstens einem zu bestimmenden anderen Inhalt in der Menge (BC) von verfügbaren Inhalten vorhanden sein muss;
- Bestimmung (E3), in der Menge (BC) von verfügbaren Inhalten, des wenigstens einen anderen Inhalts, resultierender Inhalt genannt, der das Intensitätsniveau (N) des wenigstens einen gesuchten Metadatums aufweist,
und
- Wiedergabe (E4) des wenigstens einen resultierenden Inhalts oder wenigstens einer Information (I_{RES}), die für den wenigstens einen resultierenden Inhalt (C_{RES}) repräsentativ ist.

2. Verfahren zum Zugriff auf eine Vielzahl von Inhalten nach Anspruch 1, **dadurch gekennzeichnet, dass** das in Bezug auf den Referenzinhalt definierte Intensitätsniveau der Gruppe angehört, welche wenigstens umfasst:
- ein Intensitätsniveau des gesuchten Metadatums, welches dasselbe wie dasjenige des Referenzinhalts ist,
- ein Intensitätsniveau des gesuchten Metadatums, welches höher als dasjenige des Referenzinhalts ist,
- ein Intensitätsniveau des gesuchten Metadatums, welches niedriger als dasjenige des Referenzinhalts ist,
- Intensitätsniveau des gesuchten Metadatums, welches gleich null ist.

3. Verfahren zum Zugriff auf eine Vielzahl von Inhalten nach Anspruch 1, **dadurch gekennzeichnet, dass**, wenn wenigstens ein erstes und ein zweites gesuchtes Metadatum vom Benutzer in der Vielzahl ausgewählt werden, die Anforderung umfasst:
- für das erste gesuchte Metadatum, eine Information, die für ein erstes Intensitätsniveau repräsentativ ist, das vom Benutzer in Bezug auf den Referenzinhalt definiert wurde, und
- für das zweite gesuchte Metadatum, eine Information, die für ein zweites Intensitätsniveau repräsentativ ist, das vom Benutzer in Bezug auf den Referenzinhalt definiert wurde,
und dadurch, dass der Schritt der Bestimmung den wenigstens einen resultierenden Inhalt liefert,
der das erste Intensitätsniveau des ersten gesuchten Metadatums und/oder das zweite Intensitätsniveau des zweiten gesuchten Metadatums aufweist.

4. Verfahren zum Zugriff auf eine Vielzahl von Inhalten nach Anspruch 3, **dadurch gekennzeichnet, dass** die Anforderung (Rₛ) außerdem einen Indikator (I_{COMB}) der Kombination des wenigstens ersten und zweiten gesuchten Metadatums umfasst, wobei der Schritt der Bestimmung diesen Kombinationsindikator berücksichtigt.

5. Verfahren zum Zugriff auf eine Vielzahl von Inhalten nach Anspruch 1, **dadurch gekennzeichnet, dass**, wenn wenigstens ein erstes und ein zweites gesuchtes Metadatum vom Benutzer in der Vielzahl ausgewählt werden, der Schritt der Bestimmung eine vorbestimmte Prioritätsreihenfolge (O_P) zwischen dem ersten und dem zweiten gesuchten Metadatum berücksichtigt.

6. Verfahren zum Zugriff auf eine Vielzahl von Inhalten nach Anspruch 1, **dadurch gekennzeichnet, dass** es außerdem einen Schritt der Wiedergabe (E5) des wenigstens einen gesuchten Metadatums des resultierenden Inhalts und seines Intensitätsniveaus umfasst.

7. Verfahren zum Zugriff auf eine Vielzahl von Inhalten nach Anspruch 1, **dadurch gekennzeichnet, dass** die Schritte der Wiedergabe mithilfe von Grafikfenstern ausgeführt werden, und dadurch, dass die Grafikfenster auf demselben Bildschirm wiedergegeben werden, oder auf mehreren Bildschirmen, die mit derselben Grafikkarte kommunizieren.

8. Vorrichtung (100) zum Zugriff auf eine Vielzahl von Inhalten anhand wenigstens einer Information, die für einen Inhalt, Referenzinhalt (Ci) genannt, der einer Menge von verfügbaren Inhalten (BC) angehört, repräsentativ ist, wobei die Vorrichtung **dadurch gekennzeichnet ist, dass** sie umfasst:
- ein Modul zur Wiedergabe (RES) einer Vielzahl von Metadaten des Referenzinhalts,
- ein Modul zum Empfang (R_Rₛ) einer Anforderung zur Auswahl (Rₛ), in der Vielzahl von Metadaten (MD) des Referenzinhalts, wenigstens eines Metadatums, gesuchtes Metadatum genannt, wobei das gesuchte Metadatum einem Referenzintensitätsniveau in dem Referenzinhalt zugeordnet ist, wobei ein Intensitätsniveau (N) in der Auswahlanforderung definiert ist, wobei das Intensitätsniveau (N) angibt, in Bezug auf das Referenzintensitätsniveau, in welchem Anteil des Referenzintensitätsniveaus das gesuchte Metadatum in wenigstens einem zu bestimmenden anderen Inhalt in der Menge (BC) von verfügbaren Inhalten vorhanden sein muss;
- ein Modul zur Bestimmung (M_DC), in der Menge (BC) von verfügbaren Inhalten, des wenigstens einen anderen Inhalts, resultierender Inhalt genannt, der das Intensitätsniveau des wenigstens einen gesuchten Metadatums aufweist,
wobei das Wiedergabemodul (RES) den wenigstens einen resultierenden Inhalt oder wenigstens eine Information, die für den wenigstens einen resultierenden Inhalt repräsentativ ist, wiedergibt.

9. Endgerät (TER), welches eine Vorrichtung nach Anspruch 8 enthält.

10. Computerprogramm, welches Programmcodeanweisungen zur Ausführung der Schritte des Verfahrens zum Zugriff auf eine Vielzahl von Inhalten anhand wenigstens einer Information, die für einen von dem Benutzer ausgewählten Inhalt repräsentativ ist, nach einem der Ansprüche 1 bis 7, wenn das Programm von einem Computer ausgeführt wird, umfasst.

11. Computerlesbares Aufzeichnungsmedium, auf welchem ein Computerprogramm aufgezeichnet ist, das Programmcodeanweisungen zur Ausführung der Schritte des Verfahrens zum Zugriff auf eine Vielzahl von Inhalten anhand wenigstens einer Information, die für einen von dem Benutzer ausgewählten Inhalt repräsentativ ist, nach einem der Ansprüche 1 bis 7, wenn das Programm von einem Computer ausgeführt wird, umfasst.

## Claims

1. Method for accessing a plurality of contents on the basis of at least one information item representative of at least one content, called the reference content (Ci), belonging to a set of available contents (BC), said method being **characterized in that** it comprises the following steps, implemented by a processor:
- rendering (E1) a plurality of metadata (MD) of said reference content,
- receiving (E2) a request (Rₛ) to select, from said plurality of metadata (MD) of said reference content, at least one metadatum, called the sought metadatum, said sought metadatum being associated with a reference intensity level in said reference content, an intensity level(N) being defined in the selection request, said intensity level (N) indicating, relatively to said reference intensity level, in what proportion of said reference intensity level said sought metadatum must be present in at least one other content to be determined from said set (BC) of available contents;
- determining (E3) from said set (BC) of available contents, said at least one other content, called the resulting content, having said intensity level (N) of said at least one sought metadatum,
and
- rendering (E4) said at least one resulting content or at least one information item (I_{RES}) representative of said at least one resulting content (C_{RES}).

2. Method for accessing a plurality of contents according to Claim 1, **characterized in that** said intensity level defined relatively to said reference content belongs to the group comprising at least:
- the same intensity level of said sought metadatum as that of said reference content,
- an intensity level of said sought metadatum higher than that of said reference content,
- an intensity level of said sought metadatum lower than that of said reference content,
- an intensity level of said sought metadatum of zero.

3. Method for accessing a plurality of contents contained in Claim 1, **characterized in that**, when at least first and second sought metadata are selected by the user from said plurality, said request comprises:
- for said first sought metadatum, an information item representative of a first intensity level defined by the user relatively to said reference content, and
- for said second sought metadatum, an information item representative of a second intensity level defined by the user relatively to said reference content,
and **in that** said determining step delivers said at least one resulting content having said first intensity level of said first sought metadatum and/or said second intensity level of said second sought metadatum.

4. Method for accessing a plurality of contents according to Claim 3, **characterized in that** said request (Rₛ) furthermore comprises an indicator (I_{COMB}) of combination of said at least first and second sought metadata, said determining step taking into account said indicator of combination.

5. Method for accessing a plurality of contents according to Claim 1, **characterized in that**, when at least one first and one second metadata are selected by the user from said plurality, said determining step takes into account a pre-set order of priority (O_P) between said first and said second sought metadata.

6. Method for accessing a plurality of contents according to Claim 1, **characterized in that** it furthermore comprises a step of rendering (E5) said at least one sought metadatum of said resulting content and its intensity level.

7. Method for accessing a plurality of contents according to Claim 1, **characterized in that** said rendering steps are performed by means of graphical windows, and **in that** said graphical windows are rendered on a given screen or on a plurality of screens communicating with the same graphics card.

8. Device (100) for accessing a plurality of contents from at least one information item representative of a content, called the reference content (Ci), belonging to a set of available contents (BC), said device being **characterized in that** it comprises:
- a module (RES) for rendering a plurality of metadata of said reference content,
- a module (R_Rₛ) for receiving a request (Rₛ) to select, from said plurality of metadata (MD) of said reference content, at least one metadatum, called the sought metadatum, said sought metadatum being associated with a reference intensity level in said reference content, an intensity level (N) being defined in the selection request, said intensity level (N) indicating, relatively to said reference intensity level, in what proportion of said reference intensity level of said sought metadatum must be present in at least one other content to be determined from said set (BC) of available contents;
- a module (M DC) for determining, from said set (BC) of available contents, said at least one other content, called the resulting content, having said intensity level of said at least one sought metadatum,
said rendering module (RES) rendering said at least one resulting content or at least one information item representative of said at least one resulting content.

9. Terminal (TER) containing a device according to Claim 8.

10. Computer program containing program-code instructions for executing the steps of the method for accessing a plurality of contents on the basis of at least one information item representative of a content selected by the user according to any one of Claims 1 to 7, when said program is executed by a computer.

11. Computer-readable storage medium on which is stored a computer program containing program-code instructions for executing the steps of the method for accessing a plurality of contents on the basis of at least one information item representative of a content selected by the user according to any one of Claims 1 to 7, when said program is executed by a computer.
